(19) Europäisches Patentamt
European Patent Office
Office européen des brevets

(11) **EP 3 495 656 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(51) Int Cl.:
*F03D 17/00* *(2016.01)*     *F03D 7/02* *(2006.01)*

(21) Anmeldenummer: **18210752.4**

(22) Anmeldetag: **06.12.2018**

(54) **VERFAHREN ZUR BESTIMMUNG DER BELASTUNGSDYNAMIK EINER WINDENERGIEANLAGE**

METHOD FOR DETERMINING THE LOAD DYNAMICS OF A WIND POWER STATION

PROCÉDÉ DE DÉTERMINATION DE LA DYNAMIQUE DE CHARGE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2017 DE 102017011318**

(43) Veröffentlichungstag der Anmeldung:
**12.06.2019 Patentblatt 2019/24**

(73) Patentinhaber: **Senvion GmbH**
**22297 Hamburg (DE)**

(72) Erfinder:
• **Pleß, Timo**
**24782 Büdelsdorf (DE)**
• **Warfen, Karsten**
**23795 Weede/Söhren (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
**EP-A1- 3 156 646     US-A1- 2013 214 537**

• **MARSCHNER V ET AL: "A process for providing positive primary control power by wind turbines", JOURNAL OF PHYSICS: CONFERENCE SERIES, INSTITUTE OF PHYSICS PUBLISHING, BRISTOL, GB, Bd. 570, Nr. 5, 16. Dezember 2014 (2014-12-16), Seite 52002, XP020275782, ISSN: 1742-6596, DOI: 10.1088/1742-6596/570/5/052002 [gefunden am 2014-12-16]**

EP 3 495 656 B1

## Beschreibung

Die Erfindung betrifft ein Verfahren zur Bestimmung der Belastungsdynamik einer Windenergieanlage sowie ein darauf basierendes Verfahren zum Betrieb einer Windenergieanlage, eine Windenergieanlage zur Ausführung dieses Verfahrens ausgebildete Windenergieanlage und ein entsprechendes Computerprogrammprodukt.

Bei bekannten Windenergieanlagen lässt sich ein um eine im Wesentlichen horizontale Achse drehbarer Rotor mit daran zur Einstellung des Blattwinkels drehbar angeordneten Rotorblättern durch Wind in Rotation versetzen. Der Rotor ist dabei - ggf. über eine Rotorwelle und/oder ein Getriebe - mit einem Generator zur Umwandlung der Rotationsenergie des Rotors in elektrische Energie verbunden. Die leistungsübertragenden drehenden Komponenten vom Rotor bis zum Generator werden zusammen als Triebstrang bezeichnet und sind in einer drehbar auf einem Turm montierten Gondel angeordnet.

Die für die Erzeugung elektrischer Energie erforderliche Interaktion des Rotors mit dem Wind ist u.a. aufgrund dabei auftretender Turbulenzen sehr dynamisch, sodass die auf den Rotor einwirkenden Kräfte und das daraus resultierende auf den Triebstrang wirkende Moment teilweise stark schwanken können. Entsprechende Schwankungen stellen jedoch eine nicht unerhebliche Belastung für die einzelnen Komponenten der Windenergieanlage, insbesondere des Triebstrangs dar, sodass grundsätzlich versucht wird, diese zum Schutz der Komponenten auf ein vorgegebenes maximal zulässiges Maß zu beschränken. Bei Überschreiten dessen kann die Steuerung der Windenergieanlage bspw. die Drehzahl oder die Leistung reduzieren, womit sich in der Regel auch die dynamische Belastung der Windenergieanlage verringert.

Zur Ermittlung der dynamischen Belastung ist bekannt, über eine unmittelbar gemessene oder aus den momentanen Betriebskennzahlen der Windenergieanlage abgeleitete Windgeschwindigkeit mit Hilfe eines geeigneten Modells die Turbulenzen abzuschätzen und daraus dann die dynamische Belastung der Windenergieanlage abzuleiten. Allerdings sind gemessene Windgeschwindigkeiten aufgrund des dabei erforderlichen Messortes an der Gondel häufig ungenau, da die Messung unmittelbar durch den sich drehenden Rotor stark beeinflusst wird. Bei der Ableitung der Windgeschwindigkeit aus Betriebskennzahlen, wie bspw. u.a. der Drehgeschwindigkeit des Rotors, muss zusätzlich zu dem Turbulenzmodel noch ein Modell zur Ermittlung der Windgeschwindigkeit herangezogen werden, welches zu nicht unerheblichen Unsicherheiten in Bezug auf die so ermittelte Windgeschwindigkeit beiträgt. In der Folge ist auch die auf Basis der gemessenen oder aus den Betriebskennzahlen abgeleiteten Windgeschwindigkeit ermittelte dynamische Belastung der Windenergieanlage ungenau.

Um die Windenergieanlage dennoch vor Beschädigungen zu schützen, werden regelmäßig Sicherheitsfaktoren bei den verschiedenen Schritten zur Ermittlung der dynamischen Belastung vorgesehen, was jedoch zur Folge hat, dass bspw. die Drehzahl oder Leistung einer Windenergieanlage aufgrund vermuteter hoher dynamischer Belastung reduziert wird, ohne dass dies tatsächlich erforderlich wäre.

Eine genauere Bestimmung der tatsächlich auftretenden Turbulenzen, die dann auch zu einer genaueren Bestimmung der dynamischen Belastung der Windenergieanlage führt, ist grundsätzlich mit Hilfe von LIDAR-Systemen möglich. Allerdings sind diese Systeme sehr kostenintensiv und störanfällig.

Das Dokument EP 3 156 646 A1 betrifft eine Windenergieanlage mit einem Drehzahl- und einem Generatorregler. Insbesondere wird eine Vorsteuerung beschrieben, die ein Gesamtdrehmoment berücksichtigt, das für die Bestimmung einer zeitlichen Änderung des Blatteinstellwinkels berücksichtigt wird.

Ausgehend von dem genannten Stand der Technik liegt der Erfindung daher die Aufgabe zugrunde, Verfahren sowie eine Windenergieanlage zu schaffen, bei denen die Ermittlung der dynamischen Belastung der Windenergieanlage verbessert ist.

Gelöst wird diese Aufgabe durch die Verfahren gemäß den Ansprüchen 1 und 5, sowie durch die Windenergieanlage gemäß Anspruch 8 und das Computerprogrammprodukt gemäß Anspruch 9.

Demnach betrifft die Erfindung ein Verfahren zur Bestimmung der Belastungsdynamik einer Windenergieanlage in Rückwirkung mit dem Wind, wobei die Windenergieanlage einen Triebstrang umfassend die leistungsübertragenden drehenden Komponenten vom Rotor bis zum Generator aufweist, gekennzeichnet durch die Schritte:

a) Ermittlung der momentanen, zur Beschleunigung des Triebstrangs führenden Beschleunigungsleistung aus der gemessenen Drehgeschwindigkeit des Triebstrangs;

b) Ermitteln der momentan vom Triebstrang übertragenen Leistung; und

c) Ermittlung der Belastungsdynamik als Gradient der Summe aus momentaner Beschleunigungsleistung und momentaner elektrischer Leistung.

Basierend auf diesem Verfahren betrifft die Erfindung weiterhin ein Verfahren zum Betrieb einer Windenergieanlage mit einer Anlagensteuerung und einem Triebstrang umfassend die leistungsübertragenden drehenden Komponenten vom Rotor bis zum Generator, wobei bei Überschreiten eines vorgegebenen Grenzwertes durch die erfindungsgemäß ermittelte Belastungsdynamik die Anlagensteuerung Maßnahmen zur Reduzierung der dynamischen Belastung einleitet.

Weiterhin betrifft die Erfindung auch eine Windenergieanlage umfassend einen Rotor mit mehreren, hinsichtlich des Blattwinkels einstellbaren Rotorblättern, der drehbar an einer drehbar auf einem Turm angeordneten Gondel angeordnet und über einen Triebstrang mit einem in der Gondel angeordneten Generator zur Umwandlung von auf den Rotor einwirkender Windenergie in elektrische Energie verbunden ist, und eine Anlagensteuerung zur Steuerung der Windenergieanlage und deren Komponenten, wobei die Anlagensteuerung zur Durchführung eines der erfindungsgemäßen Verfahren ausgebildet ist.

Auch betrifft die Erfindung ein Computerprogrammprodukt gemäß Anspruch 9.

Die Erfindung hat erkannt, dass sich bereits aufgrund zuverlässig bestimmbarer Betriebskennzahlen einer Windenergieanlage eine vorliegend Belastungsdynamik genannter Indikator für die durch Rückwirkungen mit dem am Rotor angreifenden Wind entstehende dynamische Belastung der Windenergieanlage ermitteln lässt. Diese Belastungsdynamik ist einerseits deutlich genauer als die aus Modellen auf Basis der Windgeschwindigkeit ermittelte dynamische Belastung, andererseits sind keine aufwendigen und kostenintensiven Sensoren, wie bspw. LIDAR-Systeme, erforderlich. Vielmehr kann vollständig auf bei der Anlagensteuerung einer Windenergieanlage regelmäßig bereits vorhandene Mess- und Steuerungsgrößen zurückgegriffen werden.

Für die Bestimmung der Belastungsdynamik wird zunächst die momentane, zur Beschleunigung des Triebstrangs führende Beschleunigungsleistung ermittelt. Dazu wird auf die Drehgeschwindigkeit des Triebstrangs zurückgegriffen, die bspw. als Winkelgeschwindigkeit $\omega$ oder Drehzahl $n = \omega/2\pi$ angegeben sein kann.

Über ein, für jede Windenergieanlage oder wenigstens jeden Windenergieanlagentyp zu bestimmendes, darüber hinaus aber konstantes Massenträgheitsmoment $J$ kann die Rotationsenergie bestimmt werden:

$$E_{Rotation} = \frac{1}{2} \cdot J \cdot \omega^2 = 2\pi^2 \cdot J \cdot n$$

Der Gradient daraus ergibt diejenige Leistung, die in Beschleunigung - also Erhöhung oder Abbremsung der Drehgeschwindigkeit - des Triebstrangs resultiert:

$$P_{Beschleunigung} = \frac{dE_{Rotation}}{dt}$$

Darüber hinaus wird diejenige Leistung ermittelt, die momentan vom Triebstrang übertragen, also vom Rotor an den Generator der Windenergieanlage abgegeben wird.

Diese Leistung lässt sich zum einen aus dem im Triebstrang wirkenden Drehmoment zusammen mit der Drehgeschwindigkeit nach der Formel

$$P_{\ddot{u}bertragen} = M \cdot \omega = \frac{1}{2\pi} \cdot M \cdot n$$

ermitteln, zum anderen kann auch auf die vom Generator abgegebene elektrische Leistung abgestellt werden, welche der vom Triebstrang übertragenen Leistung im Wesentlichen entspricht.

Sofern das Drehmoment im Triebstrang gemessen wird, kann auf den entsprechenden Messwert zurückgegriffen werden. Selbst in diesem Fall ist es aber bevorzugt, wenn anstelle eines gemessenen Drehmomentes der in der Anlagensteuerung regelmäßig für die Steuerung erforderliche und daher vorliegende Drehmomentsollwert für die Ermittlung der übertragenen Leistung herangezogen wird. Entsprechende Anlagensteuerungen von Windenergieanlagen sind dazu ausgebildet, das tatsächliche Drehmoment auf den Drehmomentsollwert zu regeln, wobei es zumindest bei modernen Anlagen nur zu äußerst geringen, vernachlässigbaren Abweichungen von Drehmoment-Ist- und Sollwert kommt. Da diese Abweichungen - so klein sie auch sein mögen - aber dennoch regelmäßig um den Sollwert schwanken, hat sich gezeigt, dass ein Rückgriff unmittelbar auf den Drehmomentsollwert zu einem robusteren Ergebnis in der erfindungsgemäßen Bestimmung der Belastungsdynamik führt, da dadurch auch sämtliche Ungenauigkeiten in der Erfassung des Istwertes vermieden werden.

Wird alternativ auf die elektrische Leistung zurückgegriffen, kann der diesbezügliche Messwert bei Bedarf noch mit einer Korrekturfunktion oder einem Korrekturfaktor k versehen werden, um evtl. Verlusten im Generator und/oder zwischen Generator und Leistungserfassung angeordneter Komponenten, wie bspw. Umrichter und/oder Transformatoren, Rechnung zu tragen. Die Korrektur mit Hilfe eines Korrekturfaktors $k$ kann bspw. erfolgen durch:

$$P_{\ddot{u}bertragen} = k \cdot P_{elektrisch}$$

Der Faktor k kann aber auch 1 sein.

Es ist selbstverständlich auch möglich, die übertragene Leistung sowohl auf Basis des Drehmoments als auch auf Basis der elektrischen Leistung zu bestimmen, um - bspw. durch Mittelwertbildung - einen ggf. noch exakteren Wert zu erhalten.

Die momentane Beschleunigungsleistung und die momentan übertragene Leistung werden dann zu einer, die Gesamtbelastung des Triebstrangs und damit auch der Windenergieanlage darstellende Leistung $P_{Gesamt}$ addiert

$$P_{Gesamt} = P_{Beschleunigung} + P_{\ddot{u}bertragen}$$

Der Gradient dieser Gesamtleistung $P_{Gesamt}$

stellt die gewünschte Belastungsdynamik der Windenergieanlage dar:

$$Belastungsdynamik = \frac{dP_{Gesamt}}{dt}$$

Bei der erfindungsgemäßen Belastungsdynamik handelt es sich somit um ein Maß für diejenige Energie, die der Wind momentan über den Rotor in die Windenergieanlage einbringt, also eine Art rotoreffektive Leistung.

Wie dargelegt, wird bei dem erfindungsgemäßen Verfahren die Belastungsdynamik ausschließlich anhand von für die Steuerung der Windenergieanlage aus anderen Gründen bereits erfassten und insbesondere zuverlässig genau erfassbaren Betriebskennzahlen oder zur Steuerung vorliegender Sollwerte ermittelt, sodass in der Regel keine zusätzlichen Sensoren o.ä. erforderliche sind. Es ist selbstverständlich, dass vor der Berücksichtigung von Messwerten beim erfindungsgemäßen Verfahren diese bei Bedarf durch geeignete Filter geglättet werden können, um stochastische Störungen o.ä. möglichst zu unterdrücken. Bei den weiteren zur Ermittlung erforderlichen Größen, wie bspw. dem Massenträgheitsmoment $J$, handelt es sich um Werte, die nach einer initialen Bestimmung als dauerhaft konstant angenommen werden können.

Es ist bevorzugt, wenn die erfindungsgemäße ermittelte Belastungsdynamik normiert wird, bspw. auf einen dimensionslosen Bereich zwischen 0 und 1. Dazu kann die wie vorstehend erläutert ermittelte Belastungsdynamik bspw. durch eine maximal zulässige Belastungsdynamik, bei der das schwächste Glied im Triebstrang oder eine andere Komponente der Windenergieanlage versagt oder zumindest in unzulässiger Weise Schaden nimmt, normiert werden. Bei einer entsprechenden Normierung würde man bei einer Belastungsdynamik von 1 also von einer Überlastung der Windenergieanlage ausgehen.

Die erfindungsgemäß ermittelte Belastungsdynamik kann bei dem Betrieb einer Windenergieanlage berücksichtigt werden, um übermäßigen, ggf. zur Beschädigung der Windenergieanlage führenden dynamischen Belastungen entgegenzuwirken.

Bei dem erfindungsgemäßen Verfahren zum Betrieb einer Windenergieanlage ist daher vorgesehen, dass, wenn die erfindungsgemäß ermittelte Belastungsdynamik einen vorgegebenen Grenzwert überschreitet, die Anlagensteuerung der Windenergieanlage Maßnahmen zur Reduzierung der dynamischen Belastung ergreift.

Bei einer auf einen Bereich von 0 bis 1 normierten Belastungsdynamik kann bspw. vorgesehen sein, dass ab einem Wert von 0.6, 0.7 oder 0.75 versucht wird, die dynamische Belastung zu reduzieren.

Insbesondere bei Maßnahmen zur Reduzierung der dynamischen Belastung, die sich skalieren lassen, ist es bevorzugt, wenn die Stärke der Maßnahmen proportional, weiter vorzugsweise linear proportional, an das Maß der Überschreitung des Grenzwertes angepasst ist. Alternativ ist es möglich, unterschiedliche Maßnahmen oder Kombinationen mehrere Maßnahmen je nach Grad der Überschreitung des vorgegebenen Grenzwertes zu ergreifen.

In anderen Worten soll bei nur geringer Überschreitung des vorgegebenen Grenzwertes für die Belastungsdynamik nur eine angemessene geringe Maßnahme zur Reduzierung der dynamischen Belastung ergriffen werden (auch um die Leistungseinspeisung der Windenergieanlage nicht unnötig zu beeinflussen), während bei einer gravierenden Überschreitung des vorgegebenen Grenzwertes oder gar kurz vor Erreichen einer normierten Belastungsdynamik von 1 erforderlich ist, die Maßnahmen zur Reduzierung der dynamischen Belastung in größerem Umfang zu nutzen oder auch mehrere Maßnahmen parallel zu ergreifen.

Zu möglichen Maßnahmen zur Reduzierung der dynamischen Belastung gehören:

- Leistungsreduzierung;

- Drehzahlreduzierung;

- Vergrößerung des Blattwinkels zur Reduzierung des Turmschubs und/oder des Strömungsabrissrisikos;

- Aktivierung oder Veränderung eines Individual Pitch Control;

- Aktivierung oder Veränderung von Reglern zur Dämpfung von Triebstrangschwingungen und/oder Turmschwingungen; und

- Änderung der Drehzahl-Drehmoment-Kennlinie oder Drehzahl-Leistungs-Kennlinie.

Durch Leistungsreduzierung und/oder Drehzahlreduzierung, die sich beliebig von 0% bis 100% (was einem Ausschalten bzw. Stillsetzen der Anlage gleichkommt) skalieren lassen, wird der Grad der Rückwirkung mit dem Wind und die dabei auftretenden Turbulenzen verändert, wodurch sich auch die dynamische Belastung reduzieren kann. Ein vergleichbarer Effekt lässt sich durch die zusätzliche oder alternative Veränderung der Drehzahl-Drehmoment-Kennlinie oder Drehzahl-Leistungs-Kennlinie der Windenergieanlage erreichen.

Durch die zusätzlich oder alternativ mögliche Vergrößerung des Blattwinkels bei hinsichtlich dieses Winkels einstellbaren Rotorblättern kann weiterhin der Turmschub und/oder das Strömungsabrissrisiko reduziert werden. Es hat sich gezeigt, dass auch diese Maßnahme die dynamische Belastung reduzieren kann. Auch hier lässt sich der Grad der Maßnahme durch das Maß der Vergrößerung des Blattwinkels skalieren.

Zuletzt ist es alternativ oder zusätzlich möglich, Regler, die im Normalbetrieb ggf. nicht aktiv sind, zu aktivieren oder bei bereits aktiven Reglern durch Anpassen von Regelungsparametern und/oder Sollwerten zu verändern. Zu diesen Reglern gehört die sog. "Individual Pitch Control" sowie Regler zur Dämpfung von Triebstrangschwingungen und/oder Turmschwingungen. Diese Regler sind im Normalbetrieb häufig nicht aktiv, da sie für den sicheren und effizienten Betrieb einer Windenergieanlage im Normalbetrieb nicht erforderlich sind und daher die von den Reglern angesteuerten Komponenten einer Windenergieanlage durch Verbleib in einem im Wesentlichen stationären Betrieb vor Verschleiß geschont werden können. Bspw. wird bei der Individual Pitch Control der Blattwinkel der einzelnen Rotorblätter individuell eingestellt und häufig auch in Abhängigkeit von der Position des Rotorblatts im Umlauf um die Rotorachse ständig verändert, um das Kippmoment auf die Rotorwelle möglichst gering zu halten.

Je nach tatsächlicher (Wind-)Situation ist nicht ausgeschlossen, dass eine der vorgenannten Maßnahmen keine unmittelbare oder ausreichende Reduzierung der dynamischen Belastung erreicht. In diesem Fall ist bevorzugt, wenn wenigstens eine weitere der genannten Maßnahmen alternativ oder zusätzlich eingeleitet wird.

Zur Erläuterung der erfindungsgemäßen Windenergieanlage sowie dem erfindungsgemäßen Computerprogrammprodukt wird auf die vorstehenden Ausführungen verwiesen.

Die Erfindung wird nun anhand eines vorteilhaften Ausführungsbeispiels unter Bezugnahme auf die beigefügten Zeichnungen weiter erläutert. Es zeigen:

Figur 1: eine schematische Darstellung der Gondel einer erfindungsgemäßen Windenergieanlage; und

Figur 2a-c: Prinzipskizzen zur alternativen Durchführungen des erfindungsgemäßen Verfahrens.

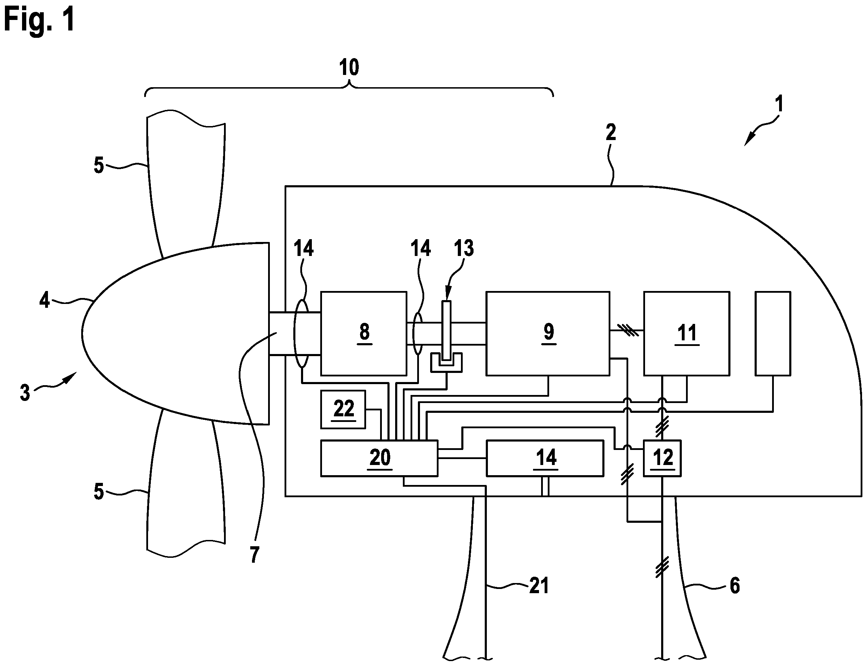

In Figur 1 ist die Gondel 2 einer erfindungsgemäße und damit zur Durchführung des erfindungsgemäßen Verfahrens ausgebildete Windenergieanlage 1 schematisch dargestellt. Die Windenergieanlage 1 umfasst einen Rotor 3 mit insgesamt drei, über nicht dargestellte Blattwinkelverstelleinrichtungen drehbar an einer Rotornabe 4 befestigten Rotorblättern 5. Der Rotor 3 ist drehbar an der Gondel 2 angeordnet, die wiederum über einen Azimutantrieb 14 drehbar um eine senkrechte Achse auf einem Turm 6 angeordnet.

Die Rotornabe 4 ist über eine Rotorwelle 7 mit zwischengeschaltetem Getriebe 8 mit einem Generator 9 zur Umwandlung von auf den Rotor 3 einwirkender Windenergie in elektrische Energie verbunden. Die leistungsübertragenden Komponenten vom Rotor 3 bis zum Generator 9 - also insbesondere die Rotorwelle 7 und das Getriebe 8 - bilden den Triebstrang 10.

Der Generator 9 ist im dargestellten Ausführungsbeispiel ein doppelt gespeister Asynchrongenerator, bei dem ein Teil der erzeugten Leistung direkt, ein anderer Teil der Leistung über einen Umrichter 11 und ein Schaltelement 12 zu einem am Fuß des Turmes 6 befindlichen Transformators (nicht dargestellt) geleitet und von dort in ein öffentliches Versorgungsnetz eingespeist wird.

Zwischen dem Getriebe 7 und dem Generator 9 ist weiterhin eine Bremse 13 vorgesehen, mit welcher eine Drehbewegung des Triebstrangs 10 abgebremst und der Rotor 3 bei Bedarf arretiert werden kann. Darüber hinaus sind Messaufnehmer 14 zur Ermittlung der Rotordrehzahl bzw. der Drehzahl der Welle 7 zwischen Getriebe 8 und Generator 9 vorgesehen.

Die Windenergieanlage 1 und ihre sämtlichen Komponenten werden durch die computerbasierte Anlagensteuerung 20 gesteuert. Dazu werden der Anlagensteuerung 20 sämtliche, in der Windenergieanlage 1 erfassten Messwerte sowie über eine Datenleitung 21 Sollwerte, bspw. von einem Netzbetreiber, zugeführt und mit Hilfe von in einem Speicher 22 abgelegten, dem Fachmann grundsätzlich bekannten Regelungsalgorithmen in Steuersignale umgesetzt, die dann wiederum an die verschiedenen Komponenten der Windenergieanlage 1 abgegeben werden.

Erfindungsgemäß ist die Anlagensteuerung 1 zur Durchführung des nachfolgend näher beschriebenen erfindungsgemäßen Verfahrens ausgebildet, wozu ein dazu ausgebildetes Computerprogrammprodukt im Speicher 22 abgelegt und von der Anlagensteuerung 20 ausgeführt wird.

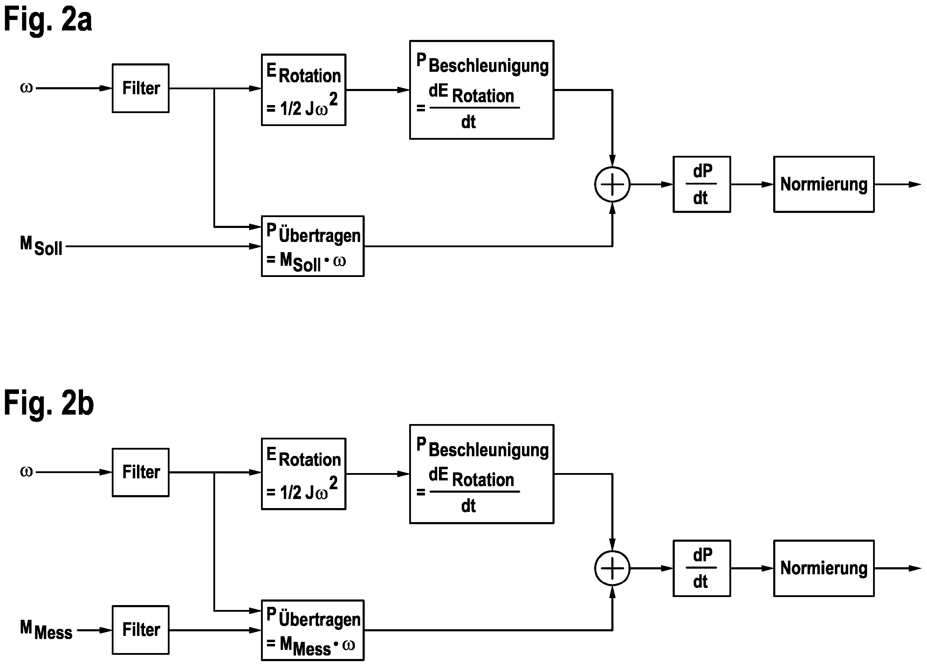

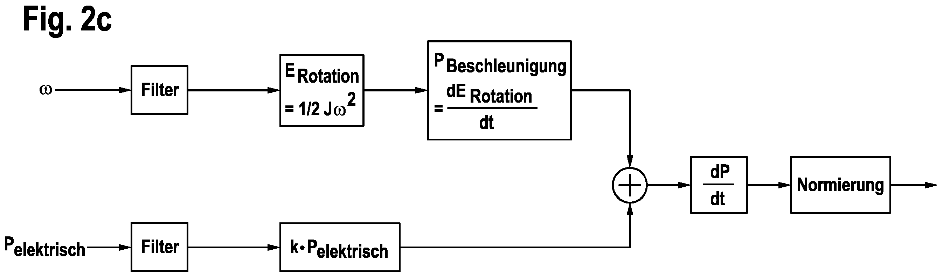

In Figur 2 sind Prinzipskizzen für alternative Durchführungen des erfindungsgemäßen Verfahrens dargestellt, die jeweils durch die Anlagensteuerung 20 ausgeführt und deren Ergebnis bei der Steuerung der Windenergieanlage 1 berücksichtigt werden können.

In Figur 2a werden als Ausgangswerte die über die Messaufnehmer 14 gemessene Winkelgeschwindigkeit $\omega$ sowie der in der Anlagensteuerung 20 vorhandene Drehmomentsollwert $M_{Soll}$ genutzt. Die Winkelgeschwindigkeit $\omega$ wird dabei aufgrund ihrer Eigenschaft als Messwert über einen Filter zur Verminderung etwaiger stochastischer Schwankungen geführt, während ein Filter für den Drehmomentsollwert $M_{Soll}$ regelmäßig nicht erforderlich ist. Sollte der Drehmomentsollwert $M_{Soll}$ wenigstens zeitweise dennoch stark schwanken können, kann auch hier in entsprechender Filter vorgesehen sein (vgl. auch Figur 2b).

Die gefilterte Winkelgeschwindigkeit $\omega$ wird zusammen mit einem im Speicher hinterlegten Wert für das Massenträgheitsmoment $J$ zur Ermittlung der Rotationsenergie gemäß der Formel

$$E_{Rotation} = \frac{1}{2} \cdot J \cdot \omega^2$$

herangezogen und durch Bildung des Gradienten daraus die Beschleunigungsleistung

$$P_{Beschleunigung} = \frac{dE_{Rotation}}{dt}$$

ermittelt.

Parallel dazu wird aus der gefilterten Winkelgeschwindigkeit $\omega$ und dem Drehmomentsollwert $M\_soll$ die vom Triebstrang übertragene Leistung ermittelt

$$P_{Übertragen} = M_{Soll} \cdot \omega$$

Die beiden so ermittelten Leistungen werden summiert und aus der Summe anschließend der Gradient gebildet. Das Ergebnis wird über einen im Speicher 22 hinterlegten Maximalwert normiert, sodass man eine normierte Belastungsdynamik erhält, die einen Wert zwischen 0 und 1 annehmen kann.

In Figur 2b ist eine alternative Durchführungen des erfindungsgemäßen Verfahrens dargestellt, die sich von derjenigen aus Figur 2a lediglich darin unterscheidet, dass anstelle des Drehmomentsollwerts $M_{Soll}$ ein gemessenes Drehmoment $M_{Mess}$ genutzt wird. Um stochastische Schwankungen zu vermindern, wird dieser gemessene Wert zunächst über einen Filter geführt bevor daraus die übertragene Leistung gemäß

$$P_{Übertragen} = M_{Mess} \cdot \omega$$

berechnet wird. Im Übrigen ist die Durchführung gemäß Figur 2b identisch zu derjenigen aus Figur 2a weshalb auf die dortigen Ausführungen verwiesen wird.

Eine weitere alternative Durchführung ist in Figur 2c gezeigt. Dort wird die übertragene Leistung nicht über ein Drehmoment, sondern vielmehr über die erzeugte elektrische Leistung $P_{elektrisch}$ ermittelt. Die erzeugte elektrische Leistung $P_{elektrisch}$ wird dabei regelmäßig bereits aus anderen Gründen von der Anlagensteuerung 20 ermittelt, sodass sie für die Durchführung des erfindungsgemäßen Verfahrens unmittelbar herangezogen werden kann.

Die erzeugte elektrische Leistung wird über einen Filter und ein Korrekturglied, in dem sie durch einen konstanten, im Speicher 22 abgelegten Korrekturfaktor k zur Ausgleich etwaiger Verluste im elektrischen System der Windenergieanlage unmittelbar der Summation mit der auf die bereits beschriebene Weise ermittelten Beschleunigungsleistung zugeführt wird. Die Ermittlung der normierten Belastungsdynamik geschieht wie in Zusammenhang mit Figur 2a beschrieben.

Die normierte Belastungsdynamik wird von der Anlagensteuerung 20 derart berücksichtigt, dass die Anlagensteuerung 20 bei Überschreiten einem im Speicher 22 abgelegten Grenzwertes von 0.75 durch die normierte Belastungsdynamik die in das Netz eingespeiste Leistung und/oder die Drehgeschwindigkeit des Rotors 3 reduziert wird. Dabei ist das Maß, um welches die Leistung bzw. die Drehgeschwindigkeit reduziert wird linear proportional abhängig von dem Maß der Grenzwertüberschreitung: bei einem nur geringen Überschreiten des Grenzwertes wird bspw. die Drehgeschwindigkeit nur um ein geringes Maß reduziert, während eine Annäherung an den zulässigen Maximalwert von 1 eine Reduzierung des Drehgeschwindigkeit auf null bedeuten kann. Dem Fachmann sind die für die Reduzierung der Leistung oder der Drehzahl einer Windenergieanlage bekannt und bedürfen daher keiner weiteren Erläuterung.

Es hat sich gezeigt, dass durch eine Reduzierung der eingespeisten Leistung und/oder der Drehzahl die dynamische Belastung einer Windenergieanlage regelmäßig reduziert werden kann.

**Patentansprüche**

1.   Verfahren zur Bestimmung der Belastungsdynamik einer Windenergieanlage (1) in Rückwirkung mit dem Wind, wobei die Windenergieanlage (1) einen Triebstrang (10) umfassend die leistungsübertragenden drehenden Komponenten vom Rotor (3) bis zum Generator (9) aufweist, **gekennzeichnet durch** die Schritte:

   a) Ermittlung der momentanen, zur Beschleunigung des Triebstrangs (10) führenden Beschleunigungsleistung ($P_{Beschleunigung}$) aus der gemessenen Drehgeschwindigkeit ($\omega$) des Triebstrangs (10);
   b) Ermitteln der momentan vom Triebstrang (10) übertragenen Leistung ($P_{Übertragen}$); und
   c) Ermittlung der Belastungsdynamik als Gradient $\left(\frac{d}{dt}\right)$ der Summe aus momentaner Beschleunigungsleistung ($P_{Beschleunigung}$) und momentan übertragener Leistung ($P_{Übertragen}$).

2.   Verfahren nach Anspruch 1, weiter umfassend den Schritt:
   d) Normierung der Belastungsdynamik, vorzugsweise auf einen dimensionslosen Bereich von 0 bis 1.

3.   Verfahren nach einem der Ansprüche 1 bis 2, **dadurch gekennzeichnet, dass**
   die momentane übertragene Leistung ($P_{Übertragen}$) aus einem momentanen Drehmomentsollwert ($M_{Soll}$) oder einem gemessenen Drehmoment ($M_{Mess}$) errechnet wird.

4.   Verfahren nach einem der Ansprüche 1 bis 2, **dadurch gekennzeichnet, dass**
   die momentane übertragene Leistung ($P_{Übertragen}$) die gemessene elektrische Leistung ($P_{elektrisch}$) ist.

**5.** Verfahren zum Betrieb einer Windenergieanlage (1) mit einer Anlagensteuerung (20) und einem Triebstrang (10) umfassend die leistungsübertragenden drehenden Komponenten vom Rotor (3) bis zum Generator (9), wobei das Verfahren die Bestimmung der Belastungsdynamik gemäß einem der vorhergehenden Ansprüche umfasst, **dadurch gekennzeichnet, dass**
bei Überschreiten eines vorgegebenen Grenzwertes durch die Belastungsdynamik die Anlagensteuerung (20) Maßnahmen zur Reduzierung der dynamischen Belastung einleitet.

**6.** Verfahren nach Anspruch 5,
**dadurch gekennzeichnet, dass**
die Stärke der Maßnahmen zur Reduzierung der dynamischen Belastung proportional, weiter vorzugsweise linear proportional, an das Maß der Überschreitung des Grenzwertes angepasst ist.

**7.** Verfahren nach Anspruch 5 und 6,
**dadurch gekennzeichnet, dass**
die Maßnahmen zur Reduzierung der Belastungsdynamik eine oder mehrere Maßnahmen umfasst aus der Gruppe von:

  - Leistungsreduzierung;
  - Drehzahlreduzierung;
  - Vergrößerung des Blattwinkels zur Reduzierung des Turmschubs und/oder des Strömungsabrissrisikos;
  - Aktivierung eines Individual Pitch Control;
  - Aktivierung von Reglern zur Dämpfung von Triebstrangschwingungen und/oder Turmschwingungen; und
  - Änderung der Drehzahl-Drehmoment-Kennlinie oder Drehzahl-Leistungs-Kennlinie.

**8.** Windenergieanlage (1) umfassend einen Rotor (3) mit mehreren, hinsichtlich des Blattwinkels einstellbaren Rotorblättern (5), der drehbar an einer drehbar auf einem Turm (6) angeordneten Gondel (2) angeordnet und über einen Triebstrang (10) mit einem in der Gondel (2) angeordneten Generator (9) zur Umwandlung von auf den Rotor (3) einwirkender Windenergie in elektrische Energie verbunden ist, und eine Anlagensteuerung (20) zur Steuerung der Windenergieanlage (1) und deren Komponenten, **dadurch gekennzeichnet, dass**
die Anlagensteuerung (20) zur Durchführung des Verfahrens nach einem der vorhergehenden Ansprüche ausgebildet ist.

**9.** Computerprogrammprodukt umfassend Programmteile, welche bewirken, wenn geladen in eine Anlagensteuerung (20) einer Windenergieanlage (1), dass die Anlagensteuerung ein Verfahren nach einem der Ansprüche 1 bis 7 durchführt.

**Claims**

**1.** Method for determining the load dynamics of a wind turbine (1) in reaction to the wind, wherein the wind turbine (1) has a drive train (10) comprising the power-transmitting rotating components ranging from the rotor (3) to the generator (9), **characterized by** the steps:

  a) determining the current acceleration power ($P_{accelera\text{-}tion}$), which causes the drive train (10) to accelerate, from the measured rotational speed ($\omega$) of the drive train (10);
  b) determining the power which is being currently transmitted by the drive train (10) ($P_{transmit}$); and
  c) determining the load dynamics as a gradient $(\frac{d}{dt})$ of the sum of current acceleration power ($P_{acceleration}$) and the currently transmitted power ($P_{transmit}$).

**2.** Method according to Claim 1, also comprising the step:
d) standardizing the load dynamics, preferably to a dimensionless range from 0 to 1.

**3.** Method according to either of Claims 1 and 2, **characterized in that**
the current transmitted power ($P_{transmit}$) is calculated from a current torque setpoint value ($M_{setp}$) or a measured torque ($M_{meas}$).

**4.** Method according to either of Claims 1 and 2, **characterized in that**
the current transmitted power ($P_{transmit}$) is the measured electrical power ($P_{electric}$).

**5.** Method for operating a wind turbine (1) having a system controller (20) and a drive train (10), comprising the power-transmitting rotating components ranging from the rotor (3) to the generator (9), wherein the method comprises determining the load dynamics according to one of the preceding claims, **characterized in that**
when a predefined limiting value is exceeded by the load dynamics, the system controller (20) initiates measures to reduce the dynamic load.

**6.** Method according to Claim 5, **characterized in that**
the magnitude of the measures for reducing the dynamic load is adapted in a proportional, more preferably linearly proportional, fashion to the extent to which the limiting value is exceeded.

**7.** Method according to Claims 5 and 6,

**characterized in that**
the measures for reducing the load dynamics comprise one or more measures from the group of

- power reduction;
- rotational speed reduction;
- increasing the blade angle in order to reduce the tower shear and/or the risk of stalling;
- activating an individual pitch control;
- activating regulators for damping drive train oscillations and/or tower oscillations; and
- changing the rotational speed torque characteristic curve or rotational speed power characteristic curve.

8. Wind turbine (1) comprising a rotor (3) having a plurality of rotor blades (5) which can be adjusted with respect to the blade angle , which rotor (3) is rotatably arranged on a gondola (2) which is rotatably arranged on a tower (6), and which rotor (3) is connected via a drive train (10) to a generator (9) which is arranged in the gondola (2) and has the purpose of converting wind energy acting on the rotor (3) into electrical energy, and a system controller (20) for controlling the wind turbine (1) and its components, **characterized in that**
the system controller (20) is designed to carry out the method according to one of the preceding claims.

9. Computer program product comprising program parts which, when loaded into a system controller (20) of a wind turbine (1), cause the system controller to carry out a method according to one of Claims 1 to 7.

**Revendications**

1. Procédé de détermination de la dynamique de charge d'une éolienne (1) en rétroaction avec le vent, l'éolienne (1) présentant un système de propulsion (10) comprenant les composants rotatifs de transmission de puissance allant du rotor (3) jusqu'au générateur (9), **caractérisé par** les étapes consistant à :

   a) déterminer la puissance d'accélération instantanée ($P_{Beschleunigung}$) aboutissant à l'accélération du système de propulsion (10) à partir de la vitesse de rotation mesurée ($\omega$) du système de propulsion (10) ;
   b) déterminer la puissance ($P_{Übertragen}$) transmise instantanément par le système de propulsion (10) ; et
   c) déterminer la dynamique de charge sous forme de gradient $\left(\frac{d}{dt}\right)$ de la somme de la puissance d'accélération ($P_{Beschleunigung}$) instantanée et de la puissance ($P_{Übertragen}$) transmise instantanément.

2. Procédé selon la revendication 1, comprenant en outre l'étape consistant à :
   d) normaliser la dynamique de charge, de préférence sur une plage sans dimension de 0 à 1.

3. Procédé selon l'une quelconque des revendications 1 à 2, **caractérisé en ce que** la puissance ($P_{Übertragen}$) transmise instantanément est calculée à partir d'une valeur de consigne de couple ($M_{Soll}$) ou d'un couple mesuré ($M_{Mess}$).

4. Procédé selon l'une quelconque des revendications 1 à 2, **caractérisé en ce que** la puissance ($P_{Übertragen}$) transmise instantanément est la puissance électrique ($P_{elektrisch}$) mesurée.

5. Procédé d'exploitation d'une éolienne (1) avec un dispositif de commande (20) et un système de propulsion (10) comprenant les composants rotatifs de transmission de puissance allant du rotor (3) jusqu'au générateur (9), le procédé comprenant la détermination de la dynamique de charge selon l'une quelconque des revendications précédentes, **caractérisé en ce qu'**en cas de dépassement d'une valeur limite prédéfinie par la dynamique de charge, le dispositif de commande (20) prend des mesures visant à réduire la charge dynamique.

6. Procédé selon la revendication 5, **caractérisé en ce que** l'étendue des mesures visant à réduire la charge dynamique est adaptée proportionnellement, de plus de préférence de manière linéairement proportionnelle, au degré du dépassement de la valeur limite.

7. Procédé selon les revendications 5 et 6, **caractérisé en ce que** les mesures visant à réduire la dynamique de charge comprennent une ou plusieurs mesures du groupe composé de :

   - la réduction de la puissance ;
   - la réduction de la vitesse de rotation ;
   - l'augmentation de l'angle de pale visant à réduire la poussée de mât et/ou le risque de décrochage ;
   - l'activation d'une commande individuelle du pas ;
   - l'activation de régulateurs pour amortir les vibrations du système de propulsion et/ou les vibrations du mât ; et
   - la modification de la courbe caractéristique vitesse de rotation - couple de rotation ou de la courbe caractéristique vitesse de rotation - puissance.

8. Eolienne (1), comprenant un rotor (3) doté de plusieurs pales de rotor (5) réglables au niveau de l'angle de pale, ledit rotor étant disposé rotatif sur une nacelle (2) disposée rotative sur un mât (6) et reliée par l'intermédiaire d'un système de propulsion (10) à un générateur (9) disposé dans la nacelle (2) pour convertir l'énergie éolienne agissant sur le rotor (3) en énergie électrique, et un dispositif de commande (20) pour commander l'éolienne (1) et ses composants, **caractérisée en ce que** le dispositif de commande (20) est réalisé pour exécuter le procédé selon l'une quelconque des revendications précédentes.

9. Produit de programme informatique, comprenant des parties de programme qui, lorsqu'elles sont chargées dans un dispositif de commande (20) d'une éolienne (1), font que le dispositif de commande exécute un procédé selon l'une quelconque des revendications 1 à 7.

**Fig. 1**

EP 3 495 656 B1

Fig. 2a

Fig. 2b

**Fig. 2c**

$\omega$ → Filter → $E_{Rotation} = 1/2\, J\omega^2$ → $P_{Beschleunigung} = \dfrac{dE_{Rotation}}{dt}$ → ⊕ → $\dfrac{dP}{dt}$ → Normierung →

$P_{elektrisch}$ → Filter → $k \cdot P_{elektrisch}$ → ⊕

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3156646 A1